# EUROPEAN PATENT APPLICATION

(11) **EP 4 227 660 A1**
(43) Date of publication of application: **16.08.2023**
(21) Application number: 21897430.1
(22) Date of filing: 27.08.2021
(51) Int. Cl.: G01M 17/007

(54) **VEHICLE PERFORMANCE EVALUATION SYSTEM, VEHICLE PERFORMANCE EVALUATION METHOD, AND VEHICLE PERFORMANCE EVALUATION PROGRAM**

(30) Priority: 25.11.2020 JP 2020195209
(71) Applicant: Mitsubishi Heavy Industries Machinery Systems, Ltd., Kobe-shi, Hyogo 652-8585 (JP)
(72) Inventor: TAKAKUWA, Yoshinao, Kobe-shi, Hyogo 652-8585 (JP); JO, Mamoru, Kobe-shi, Hyogo 652-8585 (JP); TAKAHASHI, Kunio, Kobe-shi, Hyogo 652-8585 (JP); IEHARA, Masato, Tokyo 100-8332 (JP)
(74) Representative: Hoffmann Eitle
(86) International application number: PCT/JP2021/031581
(87) International publication number: WO 2022/113452

(57) **Abstract**

This invention comprises a first testing unit for testing the performance of a vehicle, at least one second testing unit for testing the performance of the vehicle using a different method from that of the first testing unit, and a data processing device for subjecting a test result from the first testing unit and a test result from the second testing unit to alignment processing on the basis of test conditions including a weather condition and outputting an evaluation. The first testing unit comprises an environment reproduction mechanism for reproducing an environment around the vehicle under test, a travel condition reproduction mechanism for moving in relation to the vehicle under test and reproducing a vehicle travel state, and a building that covers the environment reproduction mechanism and travel condition reproduction mechanism and makes the space around a testing stage an indoor space.

## Description

### Technical Field

The present disclosure relates to a vehicle performance evaluation system, a vehicle performance evaluation method, and a vehicle performance evaluation program.

### Background Art

Examples of a testing device for a vehicle include a collision testing device for checking a safety, a test course for checking running performance, and the like. PTL 1 discloses an invention of a testing system and a testing method for performing an operation test of a safe driving assistance application by simulating a behavior of a nearby vehicle under various road surface conditions existing in an actual environment.

### Citation List

### Patent Literature

[PTL 1] Japanese Unexamined Patent Application Publication No. 2019-109728

### Summary of Invention

### Technical Problem

In recent years, vehicles having a function of assisting in driving such as autonomous driving will be developed. A vehicle having a driving assistance function detects a running state, controls a behavior of the vehicle based on a result of the detection, and outputs driving assistance information. The running state includes a state of a host vehicle and surrounding traffic participants (other vehicles, motorcycles, bicycles, pedestrians, running paths, signs, structures, and the like). Therefore, it is necessary to evaluate whether or not the running state is properly detected and whether or not control adequate for the detected running state is taken.

In the simulation described in PTL 1, analysis can be made by the simulation, but an actual test is also required for a design of the vehicle. Therefore, it is necessary to devise ways to make effective use of a result of the simulation.

### Solution to Problem

In order to solve the above problems, the present disclosure provides a vehicle performance evaluation system, a vehicle performance evaluation method, and a vehicle performance evaluation program capable of evaluating vehicle performance in more detail.

The vehicle performance evaluation system of the present disclosure includes a first testing unit that tests performance of a vehicle, at least one second testing unit that tests the performance of the vehicle by a method different from that of the first testing unit, and a management unit that manages a test result of the first testing unit and a test result of the second testing unit. The management unit includes a test condition determination device that performs alignment processing based on a test condition including a weather condition, a data processing device that outputs an evaluation, and a database. The first testing unit includes an environment reproduction mechanism that reproduces an environment around a vehicle to be tested, a running condition reproduction mechanism that moves relative to the vehicle to be tested and reproduces a running state of the vehicle, and a building that covers the environment reproduction mechanism and the running condition reproduction mechanism and has an indoor space around the vehicle. The relative movement includes a case where a surrounding traffic participant moves and a case where the vehicle to be tested moves.

The vehicle performance evaluation method of the present disclosure includes: a step of acquiring a test condition of a test executed in a first testing unit and performance of a vehicle as a test result; a step of acquiring a test condition of a test executed in at least one second testing unit that tests the performance of the vehicle by a method different from that of the first testing unit and the performance of the vehicle as a test result; and a step of subjecting the test result of the first testing unit and the test result of the second testing unit to alignment processing based on a test condition including a weather condition and outputting an evaluation thereof, in which the first testing unit includes an environment reproduction mechanism that reproduces an environment around a vehicle to be tested, a running condition reproduction mechanism that moves relative to the vehicle to be tested and reproduces a running state of the vehicle, and, a building that covers the running condition reproduction mechanism and the environment reproduction mechanism and has an indoor space around the testing platform.

The vehicle performance evaluation program of the present disclosure includes a step of acquiring a test condition of a test executed in a first testing unit and performance of a vehicle as a test result, the first testing unit including an environment reproduction mechanism that reproduces an environment around a vehicle to be tested, a running condition reproduction mechanism that moves relative to the vehicle to be tested and reproduces a running state of the vehicle, and a building that covers the running condition reproduction mechanism and the environment reproduction mechanism and has an indoor space around the testing platform; a step of acquiring a test condition of a test executed in at least one second testing unit that tests the performance of the vehicle by a method different from that of the first testing unit and the performance of the vehicle as a test result; and a step of subjecting the test result of the first testing unit and the test result of the second testing unit to alignment processing based on a test condition including a weather condition and outputting an evaluation thereof.

### Advantageous Effects of Invention

According to the present disclosure, the performance of the vehicle can be evaluated in more detail.

### Brief Description of Drawings

Fig. 1 is a block diagram showing a schematic configuration of a vehicle performance evaluation system according to an embodiment.
Fig. 2 is a block diagram showing a functional configuration of a vehicle to be tested.
Fig. 3 is an explanatory view for explaining a sensor function of the vehicle to be tested.
Fig. 4 is a block diagram showing a schematic configuration of an indoor testing unit.
Fig. 5 is a front view showing a schematic configuration of the indoor testing unit and is a case of a relative movement in which a surrounding traffic participant moves.
Fig. 6 is a side view showing a schematic configuration of the indoor testing unit and is a case of a relative movement in which a surrounding traffic participant moves.
Fig. 7 is a plan view showing a schematic configuration of a vehicle performance testing device and is a case of a relative movement in which a surrounding traffic participant moves.
Fig. 8 is a flowchart showing an example of a process of the vehicle performance evaluation system.
Fig. 9 is a flowchart showing an example of a process of a data processing device.
Fig. 10 is a flowchart showing an example of a process of a test condition determination device.
Fig. 11 is an explanatory view for explaining an example of an evaluation result of the vehicle performance evaluation system.
Fig. 12 is a schematic view of a case where the vehicle to be tested of the indoor testing unit moves.
Fig. 13 is a schematic view of a case where the vehicle to be tested of the indoor testing unit moves.
Fig. 14 is a schematic view of a case where the vehicle to be tested of the indoor testing unit moves.
Fig. 15 is a schematic view of a case where the vehicle to be tested of the indoor testing unit moves.
Fig. 16 is a schematic view of a case where the vehicle to be tested of the indoor testing unit moves.
Fig. 17 is a schematic view of a case where the vehicle to be tested of the indoor testing unit moves. Description of Embodiments

Hereinafter, an embodiment of the present disclosure will be described in detail with reference to the drawings. Note that description in the embodiment is an example of the present invention and the present invention is not limited thereto.

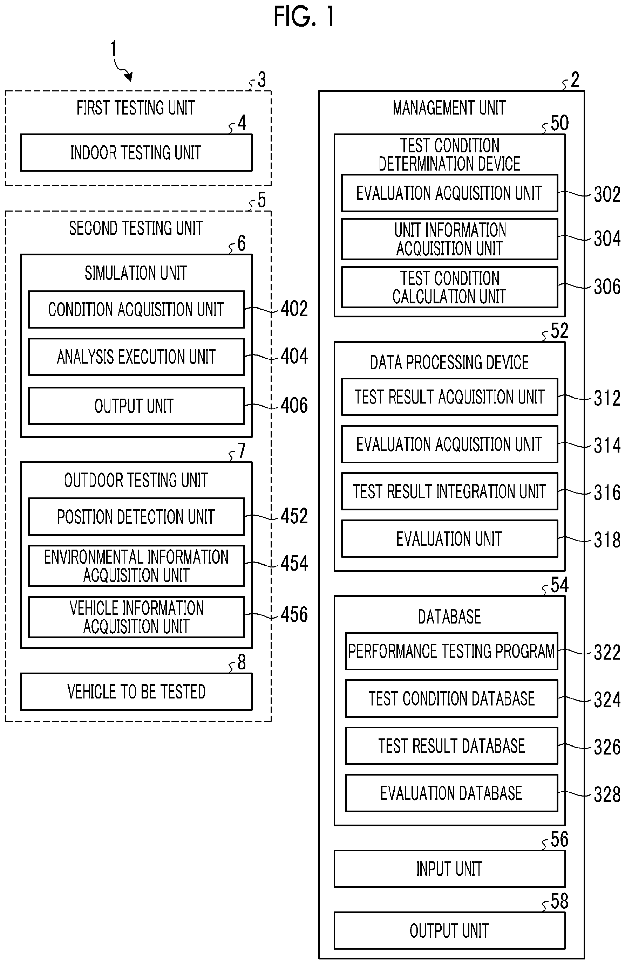

Fig. 1 is a block diagram showing a schematic configuration of a vehicle performance evaluation system 1 according to the embodiment. The vehicle performance evaluation system 1 includes a management unit 2, a first testing unit 3, and a second testing unit 5. The first testing unit 3 includes an indoor testing unit 4. The second testing unit 5 includes a simulation unit 6 and an outdoor testing unit 7. The first testing unit 3 of the present embodiment includes one indoor testing unit 4, but may include a plurality of the indoor testing units 4. The second testing unit 5 of the present embodiment includes the simulation unit 6 and the outdoor testing unit 7. However, the second testing unit 5 may include only one of the simulation unit 6 and the outdoor testing unit 7 and may include a plurality of the simulation units 6 and a plurality of the outdoor testing units 7. The vehicle performance evaluation system 1 tests a vehicle 8 to be tested and evaluates performance of the vehicle 8 to be tested. The vehicle 8 to be tested may be one or a plurality of vehicles having the same function. Further, the vehicle 8 to be tested that is tested by the simulation unit 6 only needs to have a control function of the vehicle 8 to be tested and does not need to include a vehicle body, tires, a prime mover, a sensor, or the like. The performance of the vehicle 8 to be tested is performance during running. The vehicle performance evaluation system 1 evaluates performance of a driving assistance function including autonomous driving. The driving assistance function includes an autonomous driving function of causing the vehicle to run without performing an operation by a passenger, a function of detecting surrounding conditions to provide warnings and guidance and assist the passenger in running, and the like. The autonomous driving function includes functions corresponding to various levels of autonomous driving.

The management unit 2 manages a test executed by a plurality of units that perform tests. The management unit 2 acquires and accumulates information on a test result of each unit that performs a test. The management unit 2 analyzes the test result and outputs an analysis result. In addition, the management unit 2 determines a test condition, that is, a condition of a test to be executed in each unit. The management unit 2 includes a test condition determination device 50, a data processing device 52, a database 54, an input unit 56, and an output unit 58. The management unit 2 may be one personal computer or may be configured by connecting a plurality of calculation devices via a wired or wireless network. The management unit 2 may include a plurality of the input units 56 and the output units 58. For example, the input unit 56 and the output unit 58 may be provided for each of the test condition determination device 50, the data processing device 52, and the database 54. The input unit 56 is a device that receives an input of a user and is, for example, a mouse, a keyboard, a touch panel, or the like. The output unit 58 is a device that displays calculation results of the test condition determination device 50 and the data processing device 52, data in the database, input contents from the user, and the like. The output unit 58 is, for example, a display or a touch panel.

The test condition determination device 50 determines conditions of tests of the vehicle 8 to be tested that are executed by the indoor testing unit 4, the simulation unit 6, and the outdoor testing unit 7. The test condition determination device 50 includes a calculation device, that is, a central processing unit (CPU), a storage device, that is, a memory that stores calculation contents, program information, and the like. The memory includes, for example, at least one of a random access memory (RAM), a read-only memory (ROM), and an external storage device such as a hard disk drive (HDD). The test condition determination device 50 includes an evaluation acquisition unit 302, a unit information acquisition unit 304, and a test condition calculation unit 306.

The evaluation acquisition unit 302 acquires test conditions and test results of the vehicle 8 to be tested that are executed by the indoor testing unit 4, the simulation unit 6, and the outdoor testing unit 7. The test conditions include vehicle information of the vehicle 8 to be tested, running conditions, environmental conditions, and weather conditions. The running conditions include a running speed, a steering angle, a driving source output, a braking operation, and the like of the vehicle 8 to be tested. The environmental conditions include a temperature, a brightness, a position of the sun, a road surface condition, and surrounding conditions of the vehicle 8 to be tested when running. The road surface condition is whether the road surface on which the vehicle runs is dry, wet, frozen, snowy, paved, or the like. The surrounding conditions of the vehicle 8 to be tested when running are presence or absence, a position, a moving direction, a moving speed of a pedestrian, a person riding a bicycle, an oncoming vehicle, a position of a road sign, the number of lanes, and the like. The weather conditions include weather such as sunny, cloudy, rain, snow, hail, fog, and sandstorm, wind direction, and wind speed. In a case of rain or the like, an amount of rainfall or the like is also included in the conditions. The test results include information acquired by the vehicle 8 to be tested during a test, the executed control, and the like.

The unit information acquisition unit 304 acquires information about the indoor testing unit 4, the simulation unit 6, and the outdoor testing unit 7. Specifically, the unit information acquisition unit 304 acquires a condition of a test that can be executed in each of the indoor testing unit 4, the simulation unit 6, and the outdoor testing unit 7, a device that detects test results and environmental conditions in each testing unit, and performance information.

The test condition calculation unit 306 calculates conditions of a test to be executed based on the information about the executed test acquired by the evaluation acquisition unit 302 and the information about each unit acquired by the unit information acquisition unit 304.

The data processing device 52 processes the test result based on the result of a test executed in each unit and the condition of the test and evaluates the test result. The data processing device 52 includes a calculation device, that is, a central processing unit (CPU), and a storage device, that is, a memory that stores calculation contents, program information, and the like. The memory includes, for example, at least one of a random access memory (RAM), a read-only memory (ROM), and an external storage device such as a hard disk drive (HDD). The data processing device 52 includes a test result acquisition unit 312, a parameter conversion unit 314, a test result integration unit 316, and an evaluation unit 318.

The test result acquisition unit 312 acquires test conditions and test results of the vehicle 8 to be tested executed by the indoor testing unit 4, the simulation unit 6, and the outdoor testing unit 7. The test conditions include vehicle information of the vehicle 8 to be tested, running conditions, environmental conditions, and weather conditions.

The parameter conversion unit 314 converts the test conditions of the test executed in each unit into a state capable of being evaluated with the same parameter. Here, the parameter is a condition that can be detected or set at the time of testing the vehicle 8 to be tested and is a condition selected from the weather condition, the environmental condition, and the running condition. For example, it is possible to use the amount of rainfall as the parameter while keeping the environmental conditions constant, or to use the road surface condition (wet or dry, a wet degree, or a road surface friction coefficient) as the parameter while keeping the running conditions constant. The parameter conversion unit 314 arranges the parameters based on the test conditions to bring tests executed in different units into a state capable of being evaluated with the same parameter.

The test result integration unit 316 integrates the results of the tests executed in different units based on the results converted by the parameter conversion unit 314. This makes it possible to compare the test results of a plurality of units executed on the vehicle 8 to be tested.

The evaluation unit 318 evaluates the performance of the vehicle 8 to be tested, based on the test results integrated by the test result integration unit 316. The evaluation unit 318 may create and output a graph based on the parameters integrated by the test result integration unit 316 as a result of the evaluation.

The database 54 stores and manages a program that executes processing of the management unit 2 and data related to various tests acquired by the vehicle performance evaluation system 1. The database 54 includes a calculation device, that is, a central processing unit (CPU), and a storage device, that is, a memory that stores calculation contents, program information, and the like. The memory includes, for example, at least one of a random access memory (RAM), a read-only memory (ROM), and an external storage device such as a hard disk drive (HDD). The database 54 may not include the calculation device, but may include only the storage device, and data processing (writing and reading) may be performed by the test condition determination device 50 and the data processing device 52. In addition, although the database 54 is provided in the present embodiment, the management unit 2 may store various data in the storage devices of the test condition determination device 50 and the data processing device 52. The database 54 includes a performance testing program 322, a test condition database 324, a test result database 326, and an evaluation database 328.

The performance testing program 322 is a program for executing various processes to be executed by the vehicle performance evaluation system 1 and the management unit 2. The performance testing program 322 is, for example, a program that executes processing of the test condition determination device 50 and the data processing device 52. The vehicle performance evaluation system 1 may include a program for executing tests in the indoor testing unit 4, the simulation unit 6, and the outdoor testing unit 7 in the performance testing program 322, or may include the program as a separate program. The performance testing program 322 does not have to be one program and may be a combination of a plurality of programs.

The test condition database 324 includes data of conditions of the tests executed by the indoor testing unit 4, the simulation unit 6, and the outdoor testing unit 7. The test condition database 324 includes information on a range of test conditions that can be executed by the indoor testing unit 4 and the simulation unit 6, and information for calculating test conditions based on the results acquired by the outdoor testing unit 7. The test condition database 324 includes data in which information on test conditions of each test executed in the indoor testing unit 4, the simulation unit 6, and the outdoor testing unit 7 is associated with the test results.

The test result database 326 includes data on test results acquired by being executed by the indoor testing unit 4, the simulation unit 6, and the outdoor testing unit 7. The test result includes data acquired from the vehicle 8 to be tested in the executed test, and data acquired for confirming test conditions and the like. The data acquired from the vehicle 8 to be tested includes detection results of a sensor mounted on the vehicle 8 to be tested and processing results calculated by a control unit of the vehicle 8 to be tested.

The evaluation database 328 includes data of various processing conditions and thresholds used for executing the evaluation in the evaluation unit 318, and templates such as graphs and tables for outputting evaluation results.

The indoor testing unit 4 reproduces a running state of the vehicle 8 to be tested indoors and performs a test of the vehicle 8 to be tested. The indoor testing unit 4 can reproduce running conditions, environmental conditions, and weather conditions indoors. The indoor testing unit 4 will be described later.

The simulation unit 6 executes a running test of the vehicle 8 to be tested by simulation. The simulation unit 6 includes a calculation device, that is, a central processing unit (CPU), and a storage device, that is, a memory that stores calculation contents, program information, and the like. The memory includes, for example, at least one of a random access memory (RAM), a read-only memory (ROM), and an external storage device such as a hard disk drive (HDD). The simulation unit 6 may be a part of the management unit 2. The simulation unit 6 includes a condition acquisition unit 402, an analysis execution unit 404, and an output unit 406.

The condition acquisition unit 402 acquires the test conditions input to the input unit 56. The test conditions include information on the vehicle 8 to be tested, running conditions, environmental conditions, weather conditions, and the like. The analysis execution unit 404 executes the test of the vehicle 8 to be tested by simulation based on the test conditions acquired by the condition acquisition unit 402. The simulation executed by the analysis execution unit 404 can be various simulations. The analysis execution unit 404 includes a processing unit executing a control function of the vehicle 8 to be tested, creates information acquired by various sensors of the vehicle 8 to be tested in a case where the vehicle 8 to be tested runs based on the test conditions, and inputs the created information to the processing unit. The analysis execution unit 404 acquires control information output from the processing unit as a test result. The output unit 406 outputs the test result acquired by the analysis execution unit 404 to the management unit 2.

The outdoor testing unit 7 executes a running test of the vehicle 8 to be tested outdoors. The outdoor testing unit 7 causes the vehicle 8 to be tested to run outdoors, processes information acquired from the vehicle 8 to be tested and information around the vehicle 8 to be tested, and calculates test conditions and test results. The outdoor testing unit 7 can perform both a test of causing the vehicle 8 to be tested to run on a test course and a test of causing the vehicle 8 to be tested to run on a public road. The test course is a facility provided on a closed site and can be provided with various facilities for reproducing weather conditions and environmental conditions. The public road is a place where traffic of vehicles and people unrelated to the test other than the vehicle 8 to be tested may occur. The outdoor testing unit 7 includes a position detection unit 452, an environmental information acquisition unit 454, and a vehicle information acquisition unit 456.

The position detection unit 452 detects a running position of the vehicle 8 to be tested at the time of the test. The position detection unit 452 is mounted on, for example, the vehicle 8 to be tested, and detects a position on the earth using a global navigation satellite system (GSNN). The position detection unit 452 may detect the position from a communication with a base station of a public radio communication network or from a surrounding image without being limited to the method using the GSNN.

The environmental information acquisition unit 454 acquires information on surroundings of the vehicle 8 to be tested at the time of the test. The environmental information acquisition unit 454 includes an imaging unit that images the surroundings of the vehicle 8 to be tested, a sensor that detects a brightness, a temperature, and a humidity, and the like. The environmental information acquisition unit 454 acquires information on an oncoming vehicle, situations of front and rear vehicles and information on a person or a bicycle passing through the surroundings, and the like, based on the information acquired by the imaging unit. The environmental information acquisition unit 454 also has a function of acquiring weather information and the like at the time of testing the vehicle 8 to be tested from a data server in which the weather information is recorded. The environmental information acquisition unit 454 acquires information corresponding to the environmental conditions of a position where the vehicle 8 to be tested runs at the time of the test, based on position information detected by the position detection unit 452 and map information in which the position information and the environmental information (information on the road surface and the surroundings) and the like are associated with each other.

The vehicle information acquisition unit 456 acquires information necessary for control acquired by the vehicle 8 to be tested during the test and control information output to each unit from the control unit of the vehicle 8 to be tested. The information necessary for control acquired by the vehicle 8 to be tested is information acquired by various sensors, for example, information on temperature, humidity, surrounding obstacles, oncoming vehicles, and front and rear vehicles. The control information output from the control unit of the vehicle 8 to be tested to each unit is speed control information to a drive unit, steering control information, notification information to a driver, information output to the outside such as lights and horns, and the like.

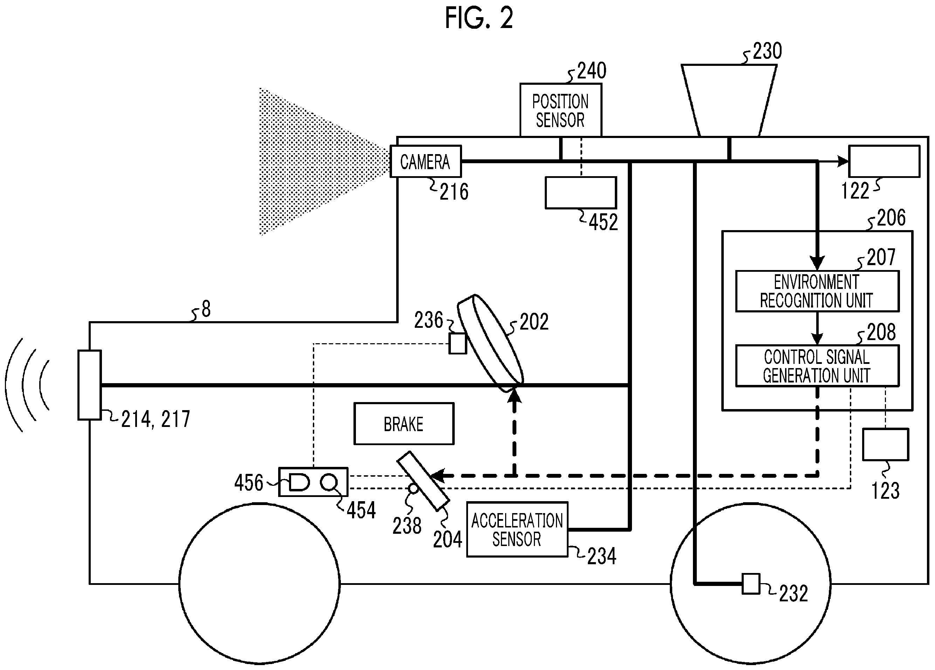

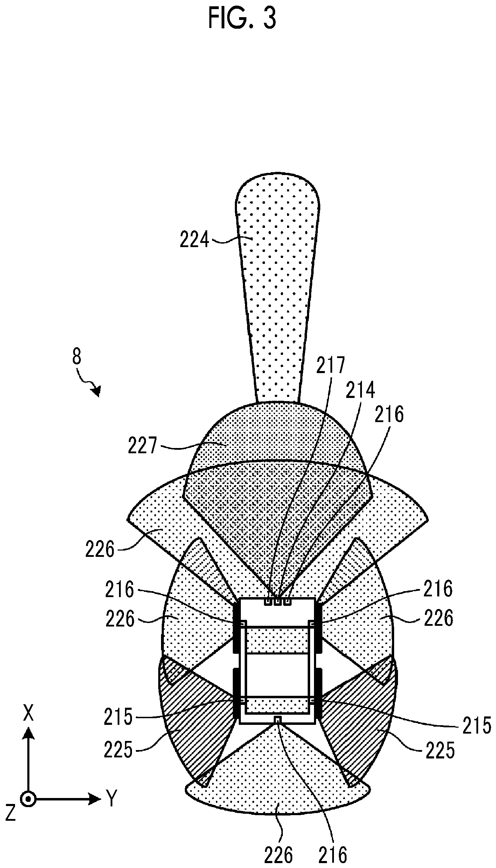

Next, an example of the vehicle 8 to be tested will be described with reference to Figs. 2 and 3. Fig. 2 is a block diagram showing a functional configuration of the vehicle to be tested. Fig. 3 is an explanatory view for explaining a sensor function of the vehicle to be tested. The vehicle 8 to be tested of the present embodiment includes a driving assistance function including an autonomous driving function. The vehicle performance evaluation system 1 of the present embodiment tests and evaluates the performance of the driving assistance function of the vehicle 8 to be tested. Further, as shown in Fig. 2, the vehicle 8 to be tested includes a steering device 202 and an operation pedal 204. The vehicle 8 to be tested includes various mechanisms necessary as a moving object, specifically, a vehicle body, tires, a driving source, a human machine interface, and the like. The steering device 202 is a device by which the driver inputs a turning operation of the tire. The operation pedal 204 includes an accelerator pedal and a brake pedal and is a device for the driver to input an operation of a driving force such as acceleration and deceleration.

The vehicle 8 to be tested includes a sensor that detects surrounding environments and performs autonomous driving or driving assistance based on a detection result of the sensor. The vehicle 8 to be tested includes a sensor unit 121 and an operation information output unit 123. The vehicle 8 to be tested has various functions necessary for running in addition to the above-described configuration. The vehicle 8 to be tested may have a structure in which only a vehicle body and a necessary sensor are provided, as a test body.

The sensor unit 121 includes a sensor that acquires surrounding information of a host vehicle and a sensor that acquires an operation input to the vehicle 8 to be tested. The sensor unit 121 can use, as the sensor that acquires surrounding information of a host vehicle, various sensors detecting surrounding objects and situations such as a camera, a millimeter-wave radar, an infrared sensor, and a light detection and ranging (or laser imaging detection and ranging (LiDAR)). In the vehicle 8 to be tested shown in Figs. 2 and 3, a millimeter-wave radar 214, a camera 216, and a LiDAR 217 are provided at a front side of the vehicle, millimeter-wave radars 215 are provided at lateral sides of the vehicle, and cameras 216 are provided at the lateral sides and a rear side of the vehicle. The millimeter-wave radar 214 is a sensor that can detect a distant object, for example, a 76-78 GHz millimeter-wave radar, and acquires information about a measurement range 224. The millimeter-wave radars 215 are sensors that detect an object in ranges narrower than that of the millimeter-wave radar 214, for example, a 24 GHz millimeter-wave radar, and acquire information about measurement ranges 225. The cameras 216 acquire images of imaging ranges 226. The LiDAR 217 acquires information about a measurement range 227 in front of the vehicle. The LiDAR 230 on an upper portion of the vehicle acquires information about the upper portion of the vehicle and front, rear, left, and right sides of the vehicle.

The sensor unit 121 includes, as the sensor that acquires an operation input to the vehicle 8 to be tested, a vehicle speed sensor 232, an acceleration sensor 234, operation detection units 236 and 238, and a position sensor 240. The vehicle speed sensor 232 detects the running speed of the vehicle 8 to be tested. The acceleration sensor 234 is a gyro sensor or the like, and detects acceleration in each direction of the vehicle 8 to be tested, and detects the acceleration in each direction and an orientation of the vehicle 8 to be tested. The operation detection unit 236 detects a steering operation input to the vehicle 8 to be tested. The operation detection unit 238 detects an operation on the driving source, such as an accelerator operation or a brake operation, which is input to the vehicle 8 to be tested. The position sensor 240 detects the position of the vehicle 8 to be tested using the GSNN.

The control device 206 executes control of the driving assistance function of the vehicle 8 to be tested. The control device 206 includes an environment recognition unit 207 and a control signal generation unit 208. The environment recognition unit 207 recognizes the surrounding conditions of the vehicle 8 to be tested, based on the information acquired by the sensor unit 121. The control signal generation unit 208 determines the control to assist in the driving of the vehicle 8 to be tested, based on the surrounding conditions recognized by the environment recognition unit 207 and generates a control signal to execute the determined control. The control signal generation unit 208 inputs the generated control signal to the steering device 202 and the operation pedal 204. The control device 206 of the present embodiment controls steering and acceleration/deceleration, as the driving assistance function. For example, the control device 206 performs autonomous driving, collision avoidance, and crisis avoidance, as the driving assistance function.

The vehicle 8 to be tested includes a sensor information output unit 122 and an operation information output unit 123 that are also a part of the indoor testing unit 4, and a position detection unit 452, an environmental information acquisition unit 454, and a vehicle information acquisition unit 456 that are a part of the outdoor testing unit 7. The sensor information output unit 122 outputs information acquired by the sensor unit 121. The operation information output unit 123 outputs operation information determined by the vehicle 8 to be tested. Here, the operation information includes information about results of operations performed on a steering wheel, an accelerator, a brake, and a shifter. The position detection unit 452, the environmental information acquisition unit 454, and the vehicle information acquisition unit 456 acquire detection results from each sensor of the vehicle 8 to be tested.

In a case where the vehicle 8 to be tested is a vehicle corresponding only to the indoor testing unit 4, the vehicle 8 to be tested may not include the position detection unit 452, the environmental information acquisition unit 454, and the vehicle information acquisition unit 456, which are a part of the outdoor testing unit 7. In addition, in a case where the vehicle 8 to be tested is a vehicle corresponding only to the indoor testing unit 4, assumed position information may be input by communication or the like as the position information. In addition, in a case where the vehicle 8 to be tested corresponds to the simulation, it is sufficient that the vehicle 8 to be tested has only a function of the control device 206.

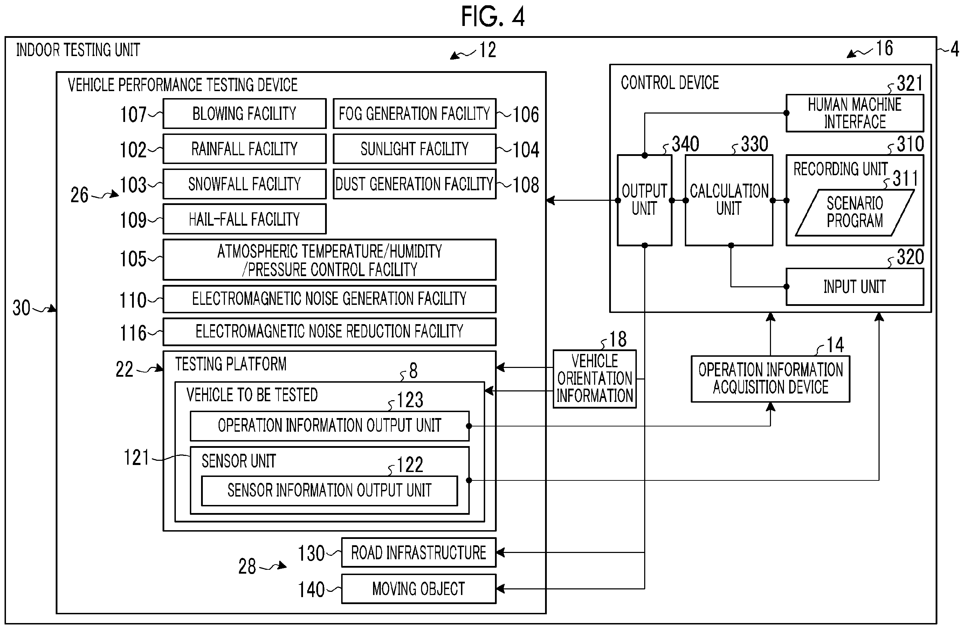

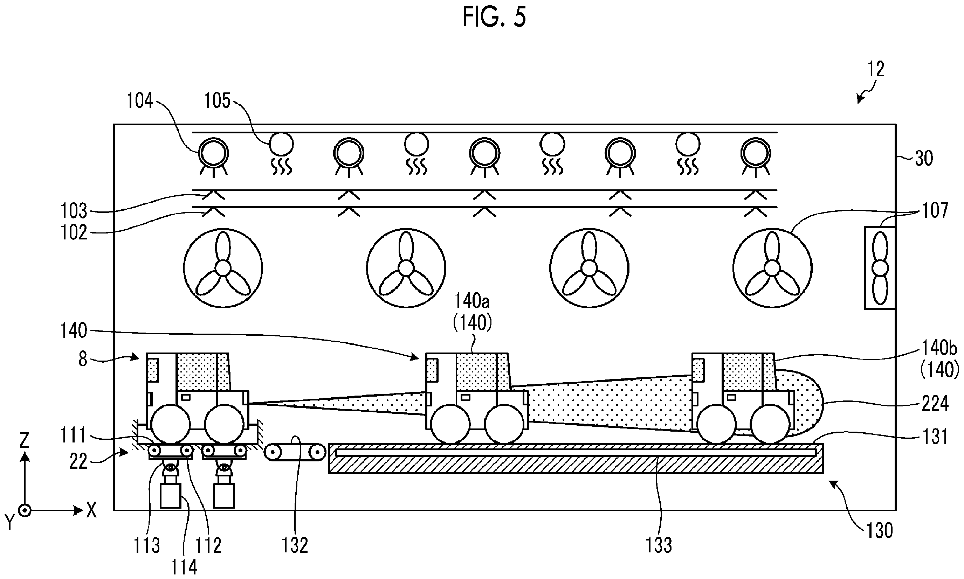

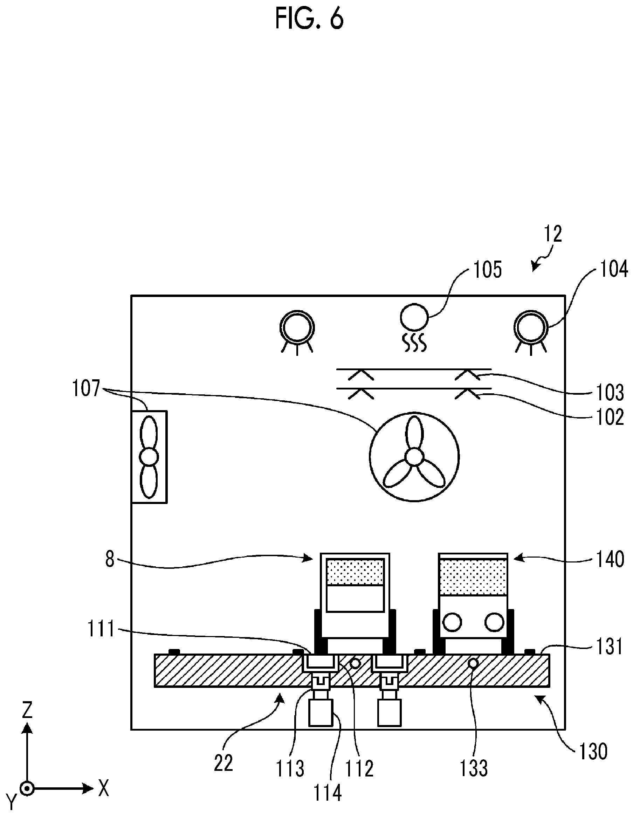

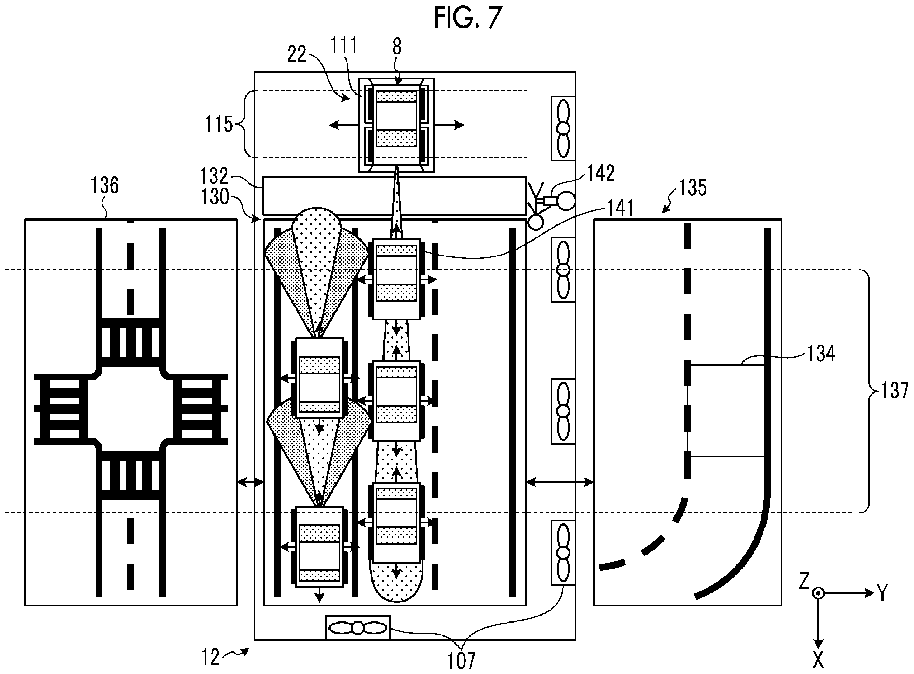

Next, the indoor testing unit will be described with reference to Figs. 4 to 7. Fig. 4 is a block diagram showing a schematic configuration of the indoor testing device. Fig. 5 is a front view showing a schematic configuration of the indoor testing unit and is a case of a relative movement in which a surrounding traffic participant moves. Fig. 6 is a side view showing a schematic configuration of the indoor testing unit and is a case of a relative movement in which a surrounding traffic participant moves. Fig. 7 is a plan view showing a schematic configuration of the vehicle performance testing device and is a case of a relative movement in which a surrounding traffic participant moves. As shown in Fig. 4, the indoor testing unit 4 reproduces a surrounding environment and a driving state of the vehicle 8 to be tested and acquires vehicle operation information of the vehicle 8 to be tested. The indoor testing unit 4 includes a vehicle performance testing device 12, an operation information acquisition device 14, and a control device 16. The vehicle performance testing device 12 includes a testing platform 22, an environment reproduction mechanism 26, a running condition reproduction mechanism 28, and a building 30.

The testing platform 22 is disposed on one end side of the indoor testing unit 4 in a longitudinal direction and at a central portion of the indoor testing unit 4 in a lateral direction and is configured to be movable in a lateral direction by means of a movement mechanism 115. The testing platform 22 is a pallet on which the vehicle 8 to be tested is installed. The testing platform 22 changes an orientation of a testing platform surface 111 on which the vehicle 8 to be tested is installed. The testing platform 22 includes four roller belts 112 disposed at the center of the testing platform surface 111 and each roller belt 112 includes a turnable pivot 113 and an actuator 114 capable of expanding and contracting the pivot 113. The testing platform 22 lifts, lowers, and tilts the testing platform surface 111 by means of expansion and contraction of each actuator 114 to change the orientation of the testing platform surface 111. The testing platform 22 may further include a table mechanism that rotates the testing platform surface 111. In the present embodiment, it is possible to perform a test for rotating the tires of the vehicle 8 to be tested by providing the roller belts 112. Regarding the testing platform 22, the testing platform surface 111 may be a plate-shaped member in a case where the vehicle 8 to be tested is not to be caused to run.

The testing platform 22 changes the orientation of the vehicle 8 to be tested by lifting, lowering, tilting, and turning the testing platform surface 111 so as to reproduce an orientation with respect to a road surface at the time of turning right or left, cornering, climbing a slope, descending a slope, starting movement, or stopping movement.

The environment reproduction mechanism 26 adjusts an environment inside the building 30 to change an environment in the surroundings of the vehicle 8 to be tested (that is, an environment in a range where detection is performed by the sensors) to an environment corresponding to test conditions. The environment reproduction mechanism 26 includes a rainfall facility 102, a snowfall facility 103, a sunlight facility 104, an atmospheric temperature/humidity/pressure control facility 105, a fog generation facility 106, a blowing facility 107, a dust generation facility 108, a hail-fall facility 109, an electromagnetic noise generation facility 110, and an electromagnetic noise reduction facility 116. The rainfall facility 102 drops a predetermined amount of water in the form of water droplets in a testing region to reproduce rain. The snowfall facility 103 produces snow and drops the produced snow in the testing region to reproduce snowfall. The sunlight facility 104 illuminates the testing region to reproduce a daytime environment. The sunlight facility 104 may irradiate a vehicle to be tested with light at a predetermined illuminance to reproduce the sun. The atmospheric temperature/humidity/pressure control facility 105 is an air conditioner having a heating function, a cooling function, a humidifying function, and a dehumidifying function, and changes the temperature and the humidity of a testing space to a temperature and a humidity corresponding to test conditions. Furthermore, the atmospheric temperature/humidity/pressure control facility 105 includes a pump and increases or decreases a pressure to a pressure corresponding to the test conditions. The fog generation facility 106 ejects mist-like water to reproduce fog in the testing region. The blowing facility 107 includes a blower that can control the direction of wind and the velocity of wind and controls the blower such that the direction of wind and the velocity of wind in the testing region correspond to test upper limits. The dust generation facility 108 generates dust in the testing region. The hail-fall facility 109 produces ice and drops the produced ice in the testing region to reproduce hail. The electromagnetic noise generation facility 110 generates an electromagnetic noise in the surroundings of the testing region. As a result, it is possible to create a testing environment in which a component that hinders the detection performed by the sensors is generated. The electromagnetic noise reduction facility 116 reduces the reflected wave of the millimeter-wave radar or LiDAR transmitted by the vehicle to be tested. The electromagnetic noise reduction facility 116 is disposed on a wall surface such as a front surface of the vehicle 8 to be tested. By providing the electromagnetic noise reduction facility 116, it is possible to suppress reflection of the millimeter-wave radar and LiDAR transmitted from the vehicle 8 to be tested at a portion other than the wall surface, for example, a position on an extension line of the road under the test conditions, and it is possible to make the environment similar to the outdoor test. The environment reproduction mechanism 26 can adjust the inside of the building 30 to correspond to the test conditions by controlling each unit based on the test conditions.

The running condition reproduction mechanism 28 reproduces a running state in a region where the sensors of the vehicle 8 to be tested, which is installed on the testing platform 22, perform detection. Specifically, the running condition reproduction mechanism 28 moves a target object that moves relatively in a case where a condition that the vehicle 8 to be tested runs is set. The running condition reproduction mechanism 28 includes a road infrastructure 130 and a moving object 140.

The road infrastructure 130 includes road surfaces 131, 135, 136, and a movable road surface 132. In the present embodiment, the road surface 131 is a road surface that is a reproduction of a three-lane road. The road surface 135 is a road surface with a curve. The road surface 135 is partially provided with a stepped road surface 134 whose height changes. The road surface 136 is a road surface that is a reproduction of a road at the intersection. The road infrastructure 130 includes a rail and the road surfaces 131, 135, and 136 are configured to be movable on a rail 137. The road infrastructure 130 also includes a mechanism that moves a road surface used for a test to a position facing the testing platform 22. In addition, the road infrastructure 130 may be provided with various road surfaces for a test such as a road surface that is a reproduction of a sandy place and an unpaved road surface. The road infrastructure 130 has a temperature adjustment function 133 inside the road surface 131 and can achieve a state in which the road surface 131 is frozen or a state in which the road surface is heated. In addition, the road infrastructure 130 may also include, for example, a traffic signal, a pedestrian crossing, a sign, a guardrail, and a building in accordance with the purpose of a test. The traffic signal, the pedestrian crossing, the sign, the guardrail, and the building may be the moving object 140 which will be described later. The movable road surface 132 is disposed between the road surface 131 and the testing platform surface 111 and changes a direction of the road surface on the entire surface of the vehicle 8 to be tested in synchronization with the movement of the testing platform surface 111. In addition, the movable road surface 132 is formed of an endless belt and moves the road surface in accordance with the running conditions of the vehicle 8 to be tested.

The moving object 140 includes various kinds of objects that move relative to the vehicle 8 to be tested. The moving object 140 includes a nearby vehicle 141 and a human-shaped model 142. The moving object 140 is movable with respect to the road infrastructure 130. The moving object 140 is disposed on the road infrastructure 130 and moves at positions on the road surface based on test conditions. The moving object 140 may move by remote control or may be manually or automatically moved based on a testing state.

The building 30 is a structure in which the testing platform 22, the environment reproduction mechanism 26, and the running condition reproduction mechanism 28 are disposed. In the building 30, an environment in the surroundings of the vehicle 8 to be tested mounted on the testing platform 22 is set as an indoor environment and a closed space is provided. Regarding the building 30, a space for the road infrastructure is preferably wider than detection ranges of the sensors of the vehicle. The testing region in the building 30 preferably has, for example, a length of 80 m or more in a longitudinal direction and a length of 15 m or more in a lateral direction. A structure in which the sensor unit 121 of the vehicle 8 to be tested does not detect a wall surface of the testing region of the building 30 as a wall surface is preferable. Specifically, it is preferable that the structure absorbs detection wavelengths of the sensors of the vehicle 8 to be tested. In addition, an image may be displayed on the wall surface of the testing region of the building 30 so that the cameras 216 do not recognize the wall surface as a wall surface.

The indoor testing unit 4 can acquire operation information determined and operated by the vehicle 8 to be tested under a predetermined reproduced environment.

The operation information acquisition device 14 communicates with the vehicle 8 to be tested and acquires operation information determined by the vehicle. The operation information acquisition device 14 outputs the acquired operation information to the control device 16. The operation information acquisition device 14 may be separated from or integrated with the indoor testing unit 4 and may be integrated with or separated from the vehicle 8 to be tested.

The control device 16 includes a recording unit 310, an input unit 320, a calculation unit 330, and an output unit 340. The recording unit 310 stores various kinds of data and a scenario program 311 is recorded thereon. In the scenario program 311, vehicle running conditions, test conditions to be reproduced by the environment reproduction mechanism 26, and information about transitions of an object in the surroundings of the vehicle running, which are to be reproduced by the running condition reproduction mechanism 28, are stored corresponding to a time axis.

The input unit 320 is a mouse, a keyboard, or a touch panel, and an operator inputs various kinds of information. A human machine interface 321 is an operation device and an emergency stoppage button for each environment reproduction mechanism and operates and stops the environment reproduction mechanism. The calculation unit 330 calculates adjustment conditions such as the amount of movement of a testing platform 410, a road infrastructure 430, and a moving object 440 based on the result of the scenario program 311 or the operation information acquisition device 14. In addition, the calculation unit 330 outputs vehicle orientation information 18, which is the orientation of the vehicle, to the vehicle 8 to be tested. Here, the vehicle orientation information 18 includes the orientation and the acceleration with respect to six axes of the vehicle 8 to be tested and includes information necessary for vehicle control such as ABS, TCS, and ESC. The control device 16 outputs the amount of movement or the like calculated by the calculation unit 330 to the output unit 340. The output unit 340 outputs the results of various calculations to the testing platform 22, the environment reproduction mechanism 26, the running condition reproduction mechanism 28, and the vehicle 8 to be tested.

Next, a method for testing driving performance of the vehicle 8 to be tested using the indoor testing unit 4 will be described. The indoor testing unit 4 installs the vehicle 8 to be tested on the testing platform 22. The indoor testing unit 4 acquires the scenario program. The scenario program is a time-series condition of a test to be executed on the vehicle 8 to be tested. The scenario program is created based on the test conditions.

The indoor testing unit 4 acquires environmental conditions and weather conditions. The indoor testing unit 4 acquires various test conditions at a target point in time to be reproduced. The indoor testing unit 4 adjusts the environment reproduction mechanism 26. That is, a temperature, a humidity, weather, and the like are set corresponding to the test conditions at the target point in time. The indoor testing unit 4 adjusts the testing platform 22. That is, the orientation of the vehicle 8 to be tested is set corresponding to the test conditions at the target point in time. The indoor testing unit 4 adjusts the running condition reproduction mechanism 28. That is, the position of the moving object 140 disposed in the surroundings of the vehicle 8 to be tested is set to a position corresponding to the environmental conditions at the target point in time. The indoor testing unit 4 notifies the vehicle 8 to be tested that conditions and scenario conditions related to the testing platform 22, the environment reproduction mechanism 26, and the running condition reproduction mechanism 28 are set.

Next, the indoor testing unit 4 acquires operation information which is a result of recognition and determination by the vehicle 8 to be tested under the test conditions. The indoor testing unit 4 calculates a next testing state based on the acquired operation information, outputs the conditions and scenario conditions related to the testing platform 22, the environment reproduction mechanism 26, and the running condition reproduction mechanism 28, and outputs the vehicle orientation information 18 to the testing platform 22 and the vehicle 8 to be tested. Next, the indoor testing unit 4 determines whether the test is completed. In a case where the indoor testing unit 4 determines that the test is not completed, the indoor testing unit 4 reproduces test conditions at a next point in time and acquires operation information of the vehicle 8 to be tested. In a case where the indoor testing unit 4 determines that the test is completed, the indoor testing unit 4 ends the present process.

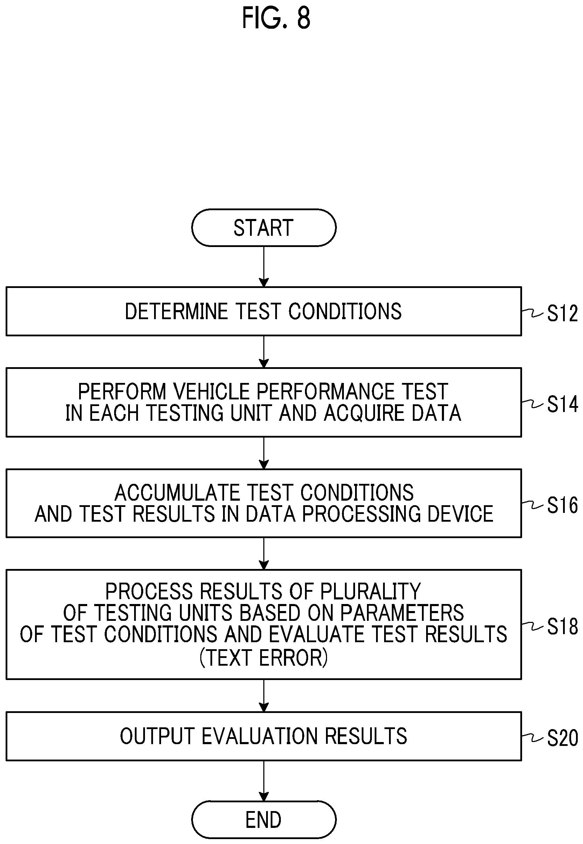

Next, processing of the vehicle performance evaluation system 1 will be described. Fig. 8 is a flow chart showing an example of a processing operation of the vehicle performance evaluation system 1. The management unit 2 determines test conditions (step S12). In a case of the test of the outdoor testing unit 7, the management unit 2 sets conditions other than conditions that cannot be set such as weather and a surrounding environment. The management unit 2 sets, for example, a date and time at which the test is to be executed, a course to be run, and the like. In a case where the test of the outdoor testing unit 7 is executed by using the test course, the management unit 2 may have a condition of using a device for reproducing the weather, the surrounding environment, or the like provided in the test course.

The management unit 2 performs a vehicle performance test in each testing unit and acquires data (step S14). The management unit 2 performs a test under test conditions in each of the indoor testing unit 4, the simulation unit 6, and the outdoor testing unit 7, and acquires test result data. The management unit 2 does not need to perform the test on all of the indoor testing unit 4, the simulation unit 6, and the outdoor testing unit 7 and may perform the test on the set unit.

The management unit 2 accumulates the test conditions and the test results in the data processing device 52 (step S16). That is, the management unit 2 accumulates information which is results of the test of the vehicle 8 to be tested executed in each testing unit. The management unit 2 accumulates the acquired data related to the test.

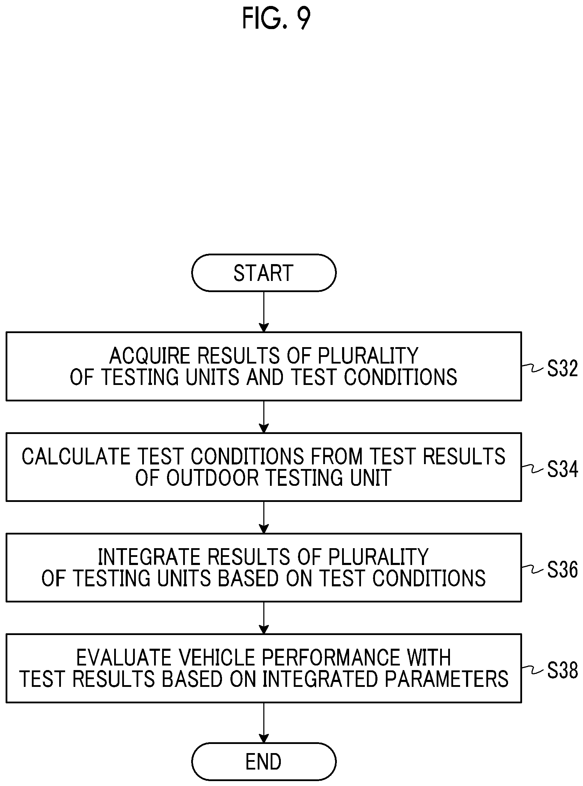

The management unit 2 processes results of a plurality of testing units based on the parameters of the test conditions and evaluates the test results (step S18). The evaluation process will be described with reference to Fig. 9. The management unit 2 outputs the evaluation result (step S20). The management unit 2 outputs the evaluation result from the output unit 58.

Next, the evaluation process executed by the data processing device will be described with reference to Fig. 9. Fig. 9 is a flowchart showing an example of a process of the data processing device. The data processing device 52 will be described as a case where the test is executed in each of the indoor testing unit 4, the simulation unit 6, and the outdoor testing unit 7. The data processing device 52 acquires the results of the plurality of testing units and the test conditions (step S32). The data processing device 52 calculates test conditions from the test results of the outdoor testing unit (step S34). Specifically, the data processing device 52 determines a weather condition, an environmental condition, and a running condition from the test result of the outdoor testing unit 7 and uses the determined result as a test condition.

The data processing device 52 integrates the results of the plurality of testing units based on the test conditions (step S36). The data processing device 52 standardizes the test conditions of each of the plurality of testing units with the same parameters and evaluates the test results of different testing units with the standardized reference.

The data processing device 52 evaluates the vehicle performance with the test results based on the integrated parameters (step S38). The data processing device 52 evaluates the performance of the vehicle 8 to be tested, based on the test results integrated based on the standardized reference. Accordingly, the results of the testing units that perform the tests in different methods can be evaluated based on one standard.

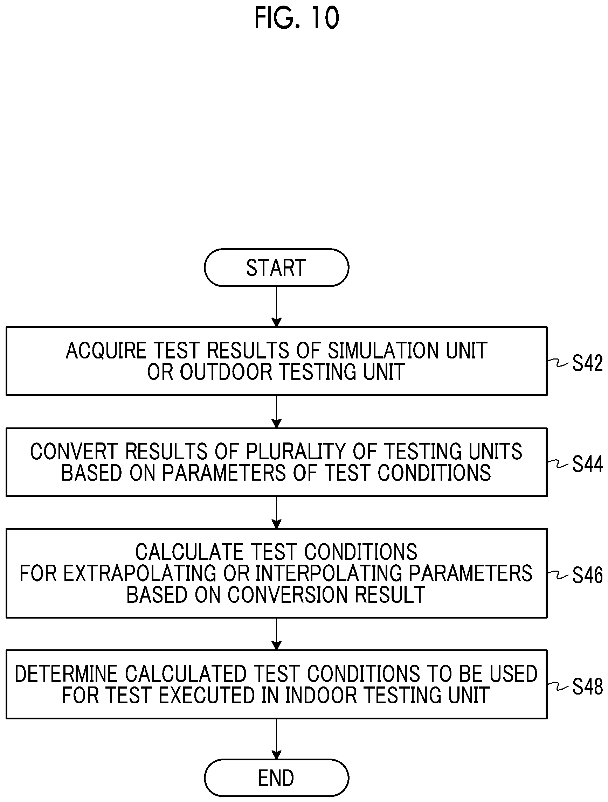

Next, an example of a process of determining the test conditions by the test condition determination device will be described. Fig. 10 is a flowchart showing an example of a process of the test condition determination device. The process shown in Fig. 10 is a process in a case where based on test conditions of the simulation unit or the outdoor testing unit, a test for interpolating the test conditions is executed in the indoor testing unit.

The test condition determination device 50 acquires test results of the simulation unit or the outdoor testing unit (step S42). The test condition determination device 50 acquires information on the executed test conditions and test results. The test condition determination device 50 converts the results of the plurality of testing units based on the parameters of the test conditions (step S44). The test condition determination device 50 performs conversion to the standardized conditions. The test condition determination device 50 calculates test conditions for extrapolating or interpolating parameters based on the conversion result (step S46). The test condition determination device 50 determines the calculated test conditions to be used for a test executed in the indoor testing unit (step S48). Accordingly, the test condition determination device 50 can perform a test under conditions in which the conditions are changed with respect to the test in which the test has been executed.

In the above-described embodiment, the processing is performed in a case of interpolating the test conditions, but in the vehicle performance evaluation system 1, the operator can also set the test conditions. In addition, in the above-described embodiment, the processing is performed in a case of interpolating the test conditions. However, in order to evaluate a correlation between test results of different testing units, the same test conditions are executed in a plurality of testing units, and the correlation between the test results may be calculated. As a result, an error in each testing unit can be interpolated, and the performance of the vehicle can be evaluated with high accuracy by using the test results of a plurality of testing units.

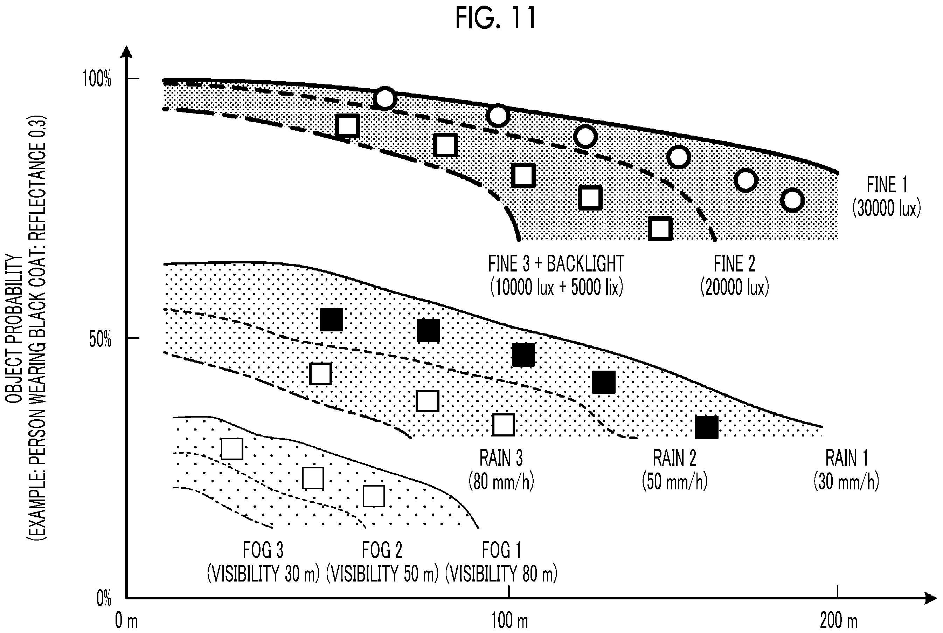

Fig. 11 is an explanatory view for explaining an example of the evaluation result of the vehicle performance evaluation system. As shown in Fig. 11, the vehicle performance evaluation system 1 can evaluate tests under a plurality of different conditions in association with each other by executing and evaluating the tests using the plurality of testing units as described above. In Fig. 11, the test results can be summarized for each of conditions that the weather conditions of fine, rain (rainfall), and fog (visibility) are different, and the performance of the vehicle can be evaluated for each condition. Fig. 11 is a graph showing a relationship between a distance of an object (person) and a detection probability under each test condition. The vehicle performance evaluation system 1 can show a correlation with the graph shown in Fig. 11 as an example of the evaluation result. In addition, the vehicle performance evaluation system 1 can perform each measurement in different testing units.

By performing a test using at least one of the simulation unit 6 or the outdoor testing unit 7, and the indoor testing unit 4, the vehicle performance evaluation system 1 can adjust the test conditions in higher detail and can evaluate the performance of the vehicle with higher accuracy by performing evaluation using both a test result with high reproducibility of weather conditions and environmental conditions that are executed in a vehicle to be tested actually in the indoor testing unit 4 and test results of other testing units.

The vehicle performance evaluation system 1 can increase an accuracy of the test result of the indoor testing unit 4 by comparing the test result of the indoor testing unit 4 with the test result of at least one of the simulation unit 6 or the outdoor testing unit 7. In addition, the performance of the vehicle can be evaluated with high accuracy with a small number of the outdoor testing units 7.

In addition, the vehicle performance evaluation system 1 can perform a test for interpolating the executed test results with high accuracy by determining the test conditions by the test condition determination device 50. Accordingly, the test can be efficiently executed.

In addition, in the vehicle performance evaluation system 1, it is preferable that the data processing device 52 adjusts the parameters of the test conditions at the time of evaluation based on information on the regulation and the idea of a development target. As a result, the evaluation result can be output based on a reference corresponding to the regulation and the idea of the development target, and the performance of the vehicle to be tested can be evaluated more effectively.

The indoor testing unit 4 can reproduce test conditions at each point in time by adjusting a surrounding environment inside the building 30 and adjusting a position of a moving object in the surroundings of the vehicle 8 to be tested, calculate a testing state at a next point in time by acquiring operation information of the vehicle 8 to be tested in a state as reproduced, and reproduce an environment in the surroundings of the vehicle 8 to be tested by operating each device.

In addition, it is possible to remove the influence of weather and an environment outside the building 30 by reproducing test conditions inside the building 30 as in the present embodiment and to perform a test with high reproducibility. Accordingly, it is possible to preferably perform comparative investigation. In addition, a test in an extreme environment can be executed with a high reproducibility.

In addition, in the present embodiment, test conditions for each timing corresponding to a predetermined time are reproduced based on a scenario program, operation information of the vehicle 8 to be tested is acquired in a state in which the test conditions are reproduced, and reproduction at a different point in time is performed when the acquisition is completed. Accordingly, it is not necessary to cause the vehicle to be tested to run actually, and thus it is possible to perform a test in a limited space. Here, examples of the predetermined time include several tens of msec to 12 msec. The predetermined time may be determined based on the rate of recognition, determination, and operation of the vehicle to be tested.

In addition, as in the present embodiment, since the vehicle 8 to be tested is installed on the testing platform 22 and the running condition reproduction mechanism 28 moves a moving object in the surroundings of the vehicle 8 to be tested relative to the vehicle 8 to be tested (that is, the running condition reproduction mechanism 28 moves a target object moving with respect to the vehicle 8 to be tested), it is possible to reduce the size of a testing environment. Here, the target object is the moving object 140 and is a nearby vehicle other than the vehicle to be tested which is a target to be tested, a model, and other objects that are generally recognized when the vehicle runs on a road.

The environment reproduction mechanism 26 reproduces at least one of the amount of rainfall, the amount of snowfall, and fog, and thus it is possible to perform a test under various running conditions.

In the above-described embodiment, the running condition reproduction mechanism 28 may consecutively reproduce running conditions and consecutively acquire data when detection is performed by the sensors after test conditions are reproduced each time a predetermined time elapses.

In addition, the indoor testing unit 4 can determine whether or not autonomous driving or driving assistance has effectively worked under a condition under which an accident has occurred by reproducing the condition under which the accident has occurred as a scenario program. In addition, the vehicle performance evaluation system 1 can check how autonomous driving or driving assistance works under test conditions by supplying acquired sensor information to a program for autonomous driving or driving assistance. In addition, as described above, the indoor testing unit 4 may determine test conditions at a next point in time by processing sensor information detected under test conditions by means of a program for autonomous driving and driving assistance.

Here, the indoor testing unit 4 preferably has the structure of the above-described embodiment, but is not limited thereto. The indoor testing unit 4 only needs to be able to reproduce environmental conditions and weather conditions indoors. In the indoor testing unit 4 of the above-described embodiment, the environmental conditions around the vehicle 8 to be tested are reproduced by disposing the vehicle 8 to be tested on the testing platform 22 (pallet) and relatively moving a target object disposed around the vehicle 8 to be tested while changing the orientation of the vehicle 8 to be tested by the orientation of the testing platform 22, but the present invention is not limited thereto. The relative movement is not limited to a case where a surrounding traffic participant moves as in the present embodiment, and the vehicle to be tested may move as described later. The case where the vehicle to be tested moves includes a case where only the vehicle to be tested moves and a case where both the vehicle to be tested and the traffic participant move. In addition, the traffic participants include other vehicles, motorcycles, bicycles, pedestrians, running paths, signs, structures, and the like.

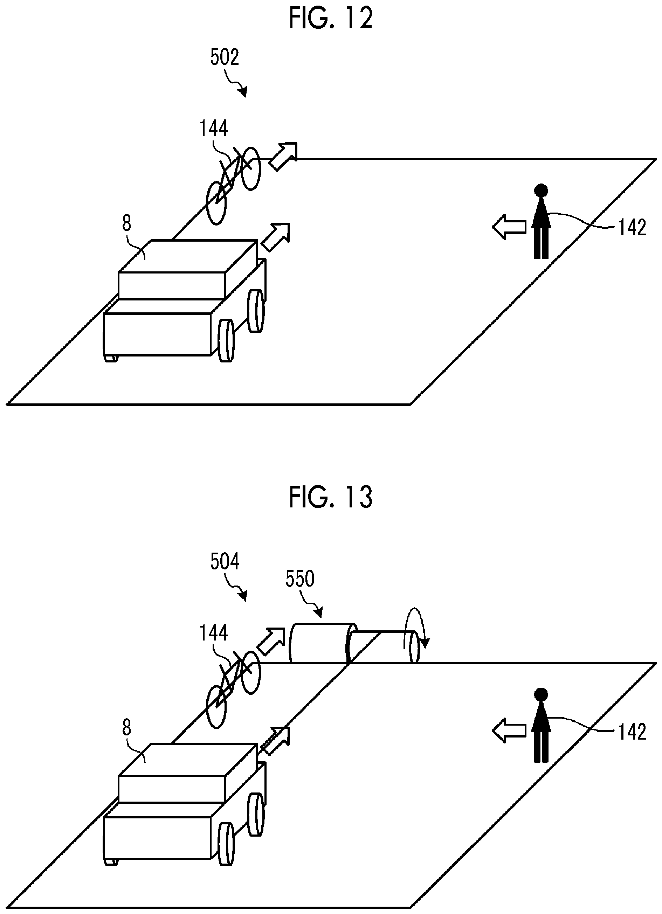

Fig. 12 is a schematic view of a case where the vehicle to be tested of the indoor testing unit moves. An indoor testing unit 502 shown in Fig. 12 is the same as the indoor testing unit 4 except for a mechanism for relative movement between the vehicle 8 to be tested and a target object disposed around the vehicle 8 to be tested. The indoor testing unit 502 causes the vehicle 8 to be tested to run. The indoor testing unit 502 moves the vehicle 8 to be tested relative to surrounding structures, for example, the human-shaped model 142 and the bicycle 144 by causing the vehicle 8 to be tested to run. The indoor testing unit 502 reproduces the test conditions by causing the vehicle to run inside the building.

Fig. 13 is a schematic view of a case where the vehicle to be tested of the indoor testing unit moves. An indoor testing unit 504 shown in Fig. 13 is the same as the indoor testing unit 4 except for a mechanism for relative movement between the vehicle 8 to be tested and a target object disposed around the vehicle 8 to be tested. The indoor testing unit 504 includes a traction mechanism 550 that tows the vehicle 8 to be tested. The traction mechanism 550 tows the vehicle 8 to be tested, thereby moving the vehicle 8 to be tested relative to surrounding structures, for example, the human-shaped model 142 and the bicycle 144. The indoor testing unit 502 reproduces the test conditions by towing the vehicle with the traction mechanism 550 inside the building. By using the traction mechanism 550, the vehicle to be tested can be towed under the same condition, and the reproducibility can be improved.

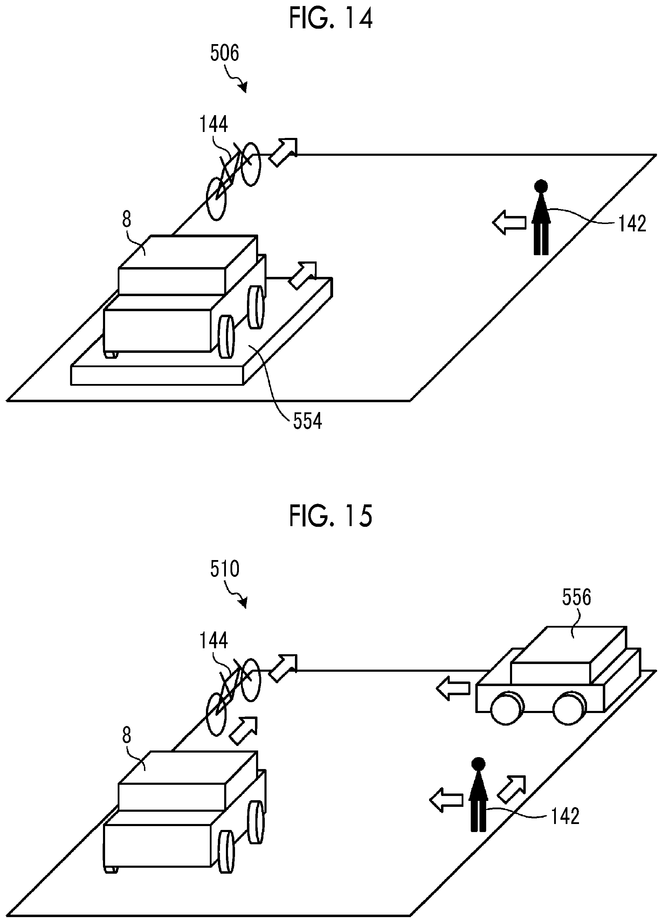

Fig. 14 is a schematic view of a case where the vehicle to be tested of the indoor testing unit moves. An indoor testing unit 506 shown in Fig. 14 is the same as the indoor testing unit 4 except for a mechanism for relative movement between the vehicle 8 to be tested and a target object disposed around the vehicle 8 to be tested. The indoor testing unit 506 includes a moving carriage 554 that moves the vehicle 8 to be tested. The vehicle 8 to be tested is placed on the moving carriage 554, and the moving carriage 554 moves in a predetermined direction by a driving mechanism. The moving carriage 554 moves in a state in which the vehicle 8 to be tested is placed, thereby moving the vehicle 8 to be tested relative to surrounding structures, for example, the human-shaped model 142 and the bicycle 144. The indoor testing unit 506 reproduces the test conditions by towing the vehicle with the moving carriage 554 inside the building.

Fig. 15 is a schematic view of a case where the vehicle to be tested of the indoor testing unit moves. An indoor testing unit 510 shown in Fig. 15 is the same as the indoor testing unit 4 except for a mechanism for relative movement between the vehicle 8 to be tested and a target object disposed around the vehicle 8 to be tested. The indoor testing unit 510 causes the vehicle 8 to be tested to run. In addition, the indoor testing unit 510 also moves surrounding structures, the human-shaped model 142, the bicycle 144, and a vehicle 556 by their driving methods. The indoor testing unit 510 moves the vehicle 8 to be tested and the human-shaped model 142, the bicycle 144, or the vehicle 556, so that the vehicle 8 to be tested and the surroundings are relatively moved.

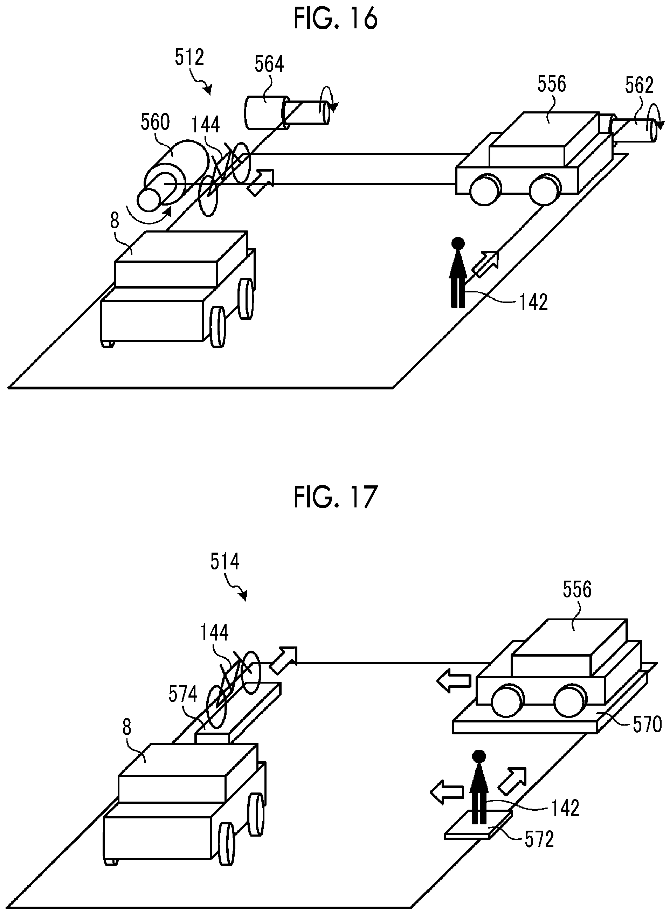

Fig. 16 is a schematic view of a case where the vehicle to be tested of the indoor testing unit moves. An indoor testing unit 512 shown in Fig. 16 is the same as the indoor testing unit 4 except for a mechanism for relative movement between the vehicle 8 to be tested and a target object disposed around the vehicle 8 to be tested. The indoor testing unit 512 causes the vehicle 8 to be tested to run. In addition, the indoor testing unit 512 also moves surrounding structures, the human-shaped model 142, the bicycle 144, and the vehicle 556 by respective traction mechanisms 560, 562, and 564. The traction mechanism 560 tows the vehicle 556 to move the vehicle 556 relative to the vehicle 8 to be tested. The traction mechanism 562 tows the human-shaped model 142 to move the human-shaped model 142 relative to the vehicle 8 to be tested. The traction mechanism 562 tows the bicycle 144 to move the bicycle 144 relative to the vehicle 8 to be tested. The indoor testing unit 512 reproduces the test conditions by causing the vehicle to run inside the building and moving the surrounding structures, the human-shaped model 142, the bicycle 144, and the vehicle 556 by the respective traction mechanisms 560, 562, and 564. By using the traction mechanisms 560, 562, and 564, the vehicle to be tested can be towed under the same condition, and the reproducibility can be improved.

Fig. 17 is a schematic view of a case where the vehicle to be tested of the indoor testing unit moves. An indoor testing unit 514 shown in Fig. 17 is the same as the indoor testing unit 4 except for a mechanism for relative movement between the vehicle 8 to be tested and a target object disposed around the vehicle 8 to be tested. The indoor testing unit 514 causes the vehicle 8 to be tested to run. In addition, the indoor testing unit 514 also moves surrounding structures, the human-shaped model 142, the bicycle 144, and the vehicle 556 by respective moving carriages 570, 572, and 574. The moving carriage 570 moves the vehicle 556 relative to the vehicle 8 to be tested by moving in a state in which the vehicle 556 is placed. The moving carriage 572 moves the human-shaped model 142 relative to the vehicle 8 to be tested by moving in a state in which the human-shaped model 142 is placed. The moving carriage 574 moves the bicycle 144 relative to the vehicle 8 to be tested by moving in a state in which the bicycle 144 is placed. The indoor testing unit 514 reproduces the test conditions by causing the vehicle to run inside the building and moving the surrounding structures, the human-shaped model 142, the bicycle 144, and the vehicle 556 by the respective moving carriages 570, 572, and 574.

The constitutional elements described above include those that can be easily assumed by those skilled in the art and those that are substantially the same. Furthermore, the configurations described above can be appropriately combined. In addition, various omissions, substitutions, or modifications of the configurations can be made without departing from the gist of the present invention.

### Reference Signs List

- 1:: vehicle performance evaluation system
- 2:: management unit
- 3:: first testing unit
- 4:: indoor testing unit
- 5:: second testing unit
- 6:: simulation unit
- 7:: outdoor testing unit
- 8:: vehicle to be tested
- 12:: vehicle performance testing device
- 14:: operation information acquisition device
- 16:: control device
- 18:: vehicle orientation information
- 22:: testing platform
- 26:: environment reproduction mechanism
- 28:: running condition reproduction mechanism
- 30:: building
- 50:: test condition determination device
- 52:: data processing device
- 54:: database
- 56:: input unit
- 58:: output unit
- 102:: rainfall facility
- 103:: snowfall facility
- 104:: sunlight facility
- 105:: atmospheric temperature/humidity/pressure control facility
- 106:: fog generation facility
- 107:: blowing facility
- 108:: dust generation facility
- 109:: hail-fall facility
- 110:: electromagnetic noise generation facility
- 111:: testing platform surface
- 112:: roller belt
- 113:: pivot
- 114:: actuator
- 115:: movement mechanism
- 116:: electromagnetic noise reduction facility
- 121:: sensor unit
- 122:: sensor information output unit
- 123:: operation information output unit
- 130:: road infrastructure
- 131, 135, 136:: road surface
- 132:: movable road surface
- 133:: temperature adjustment function
- 134:: stepped road surface
- 137:: rail
- 140:: moving object
- 141:: nearby vehicle
- 142:: human-shaped model
- 144:: bicycle
- 202:: steering device
- 204:: operation pedal
- 206:: control device
- 207:: environment recognition unit
- 208:: control signal generation unit
- 214:: millimeter-wave radar
- 215:: millimeter-wave radar
- 216:: camera
- 217:: LiDAR
- 224:: measurement range
- 225:: measurement range
- 226:: imaging range
- 227:: measurement range
- 230:: LiDAR
- 232:: vehicle speed sensor
- 234:: acceleration sensor
- 236, 238:: operation detection unit
- 240:: position sensor
- 302:: evaluation acquisition unit
- 304:: unit information acquisition unit
- 306:: test condition calculation unit
- 312:: test result acquisition unit
- 314:: parameter conversion unit
- 316:: test result integration unit
- 318:: evaluation unit
- 322:: performance testing program
- 324:: test condition database
- 326:: test result database
- 328:: evaluation database
- 402:: condition acquisition unit
- 404:: analysis execution unit
- 406:: output unit
- 452:: position detection unit
- 454:: environmental information acquisition unit
- 456:: vehicle information acquisition unit

## Claims

1. A vehicle performance evaluation system comprising:
a first testing unit that tests performance of a vehicle;
at least one second testing unit that tests the performance of the vehicle by a method different from that of the first testing unit; and
a data processing device that subjects a test result of the first testing unit and a test result of the second testing unit to alignment processing based on a test condition including a weather condition and outputs an evaluation thereof,
wherein the first testing unit includes an environment reproduction mechanism that reproduces an environment around a vehicle to be tested, a running condition reproduction mechanism that moves relative to the vehicle to be tested and reproduces a running state of the vehicle, and a building that covers the environment reproduction mechanism and the running condition reproduction mechanism and has an indoor space around the vehicle.

2. The vehicle performance evaluation system according to claim 1, wherein the second testing unit includes an outdoor testing unit that causes the vehicle to run on a public road and evaluates the performance of the vehicle, and
the vehicle performance evaluation system further comprises a test condition determination device that determines test conditions for the first testing unit and another second testing unit based on a test result of the outdoor testing unit.

3. The vehicle performance evaluation system according to claim 1 or 2, wherein the second testing unit includes a simulation unit that evaluates the performance of the vehicle by simulation.

4. The vehicle performance evaluation system according to claim 1 or 3, further comprising a test condition determination device that determines a test condition of the first testing unit based on the test result of the second testing unit.

5. The vehicle performance evaluation system according to claim 2 or 4, wherein the test condition determination device calculates a test condition for interpolating or extrapolating a test condition of the second testing unit, and
the calculated test condition for interpolating or extrapolating is used as a test condition to be executed in the first testing unit.

6. The vehicle performance evaluation system according to any one of claims 1 to 5, wherein based on the test result of the first testing unit and the test result of the second testing unit, the data processing device uses one condition of the test conditions as a parameter to estimate a change in the performance of the vehicle with respect to the parameter and calculate a performance line.

7. The vehicle performance evaluation system according to any one of claims 1 to 6, wherein based on the test result of the first testing unit and the test result of the second testing unit, the data processing device estimates the performance of the vehicle in a situation where the test conditions are different and uses a result of the estimation as a test result of the test condition.

8. The vehicle performance evaluation system according to any one of claims 1 to 7, wherein the running condition reproduction mechanism moves a target object that moves with respect to the vehicle.

9. The vehicle performance evaluation system according to any one of claims 1 to 8, wherein the first testing unit includes a testing platform on which the vehicle is mounted and capable of changing an orientation and a direction of the vehicle, and
the running condition reproduction mechanism includes a vehicle that moves relative to the testing platform and a movement mechanism that is installed in a vicinity of a running road surface and moves a structure relative to the testing platform.

10. The vehicle performance evaluation system according to any one of claims 1 to 9, wherein the environment reproduction mechanism reproduces at least one of a rainfall amount, a snowfall amount, and a fog.

11. The vehicle performance evaluation system according to any one of claims 1 to 10, wherein the environment reproduction mechanism reproduces at least one of a state of a running road surface and a brightness around the vehicle.

12. The vehicle performance evaluation system according to any one of claims 1 to 11, wherein the environment reproduction mechanism reduces a reflected wave of a sensor transmitted by the vehicle.

13. The vehicle performance evaluation system according to any one of claims 1 to 12, wherein the performance of the vehicle is a driving assistance function of the vehicle.

14. A vehicle performance evaluation method comprising:
a step of acquiring a test condition of a test executed in a first testing unit and performance of a vehicle as a test result;
a step of acquiring a test condition of a test executed in at least one second testing unit that tests the performance of the vehicle by a method different from that of the first testing unit and the performance of the vehicle as a test result; and
a step of subjecting the test result of the first testing unit and the test result of the second testing unit to alignment processing based on a test condition including a weather condition and outputting an evaluation thereof,
wherein the first testing unit includes an environment reproduction mechanism that reproduces an environment around a vehicle to be tested, a running condition reproduction mechanism that moves relative to the vehicle to be tested and reproduces a running state of the vehicle, and a building that covers the environment reproduction mechanism and the running condition reproduction mechanism and has an indoor space around the vehicle.

15. A vehicle performance evaluation program comprising:
a step of acquiring a test condition of a test executed in a first testing unit and performance of a vehicle as a test result, the first testing unit including an environment reproduction mechanism that reproduces an environment around a vehicle to be tested, a running condition reproduction mechanism that moves relative to the vehicle to be tested and reproduces a running state of the vehicle, and a building that covers the running condition reproduction mechanism and the environment reproduction mechanism and has an indoor space around the vehicle to be tested;
a step of acquiring a test condition of a test executed in at least one second testing unit that tests the performance of the vehicle by a method different from that of the first testing unit and the performance of the vehicle as a test result; and
a step of subjecting the test result of the first testing unit and the test result of the second testing unit to alignment processing based on a test condition including a weather condition and outputting an evaluation thereof.
